# EUROPEAN PATENT APPLICATION

(11) **EP 1 564 413 A1**
(43) Date of publication of application: **17.08.2005**
(21) Application number: 02788643.1
(22) Date of filing: 22.11.2002
(51) Int. Cl.: F15B 1/04, F16B 33/04

(54) **ACCUMULATOR USING INTERNAL AND EXTERNAL THREADS**

(71) Applicant: Sugimura, Nobuyuki, Shizuoka-shi, Shizuoka 424-0876 (JP); Nippon Accumulator Co., Ltd., Shizuoka-shi, Shizuoka 424-0038 (JP)
(72) Inventor: SUGIMURA, Nobuyuki, Shizuoka 424-0876 (JP); WADA, Yasumichi, Shizuoka 424-0038 (JP)
(74) Representative: Skuhra, Udo, Dipl.-Ing.
(86) International application number: PCT/JP2002/012239
(87) International publication number: WO 2004/048785

(57) **Abstract**

An accumulator (ACC) in which a container main body(1) and a closure member (5) are screw-joined together. A reverse-buttress internal thread or an internal thread having an included angle of 90 degrees is used as an internal thread of the screw-joined portion. The reverse-buttress internal thread is formed in such a way that the inclination angle (β) of a clearance flank of the buttress internal thread is the inclination angle (β) of a reverse pressure flank (20A) receiving a load, the inclination angle (θ) of a pressure flank is the inclination angle (θ) of a reverse clearance flank (2B). The internal thread having an included angle of 90 degrees is formed in such a way that inclination angles (α), (γ) of both flanks are equal and the included angle (δ) is about 90 degrees.

## Description

### Technical Field

This invention relates to an internal thread and an accumulator using the same.

### Technical Background

An accumulator is formed by dividing the interior of a container main body into a gas chamber and a liquid chamber by a bladder, screwing a closure member into a top end portion of the container main body, and screwing a supply/discharge tube into the other end portion thereof. In these screwing operations, threads stipulated by JIS(Japanese Industrial Standards) and ISO(International Organization for Standardization), for example, triangular threads are used. The angle of inclination of a pressure flank and a clearance flank of each of these triangular threads is formed to be 30 degrees respectively, and an included angle is 60 degrees.

When an inner pressure in this accumulator increases, the closure member is pressed outward, so that an axial and circumferential load, namely, a so-called fluctuating load is imparted to the thread repeatedly in the range of zero to a maximum level. This load is not borne uniformly by each ridge but one-sided greatly in the tensile direction. Therefore, stress concentration occurs in a bottom of a valley of a base end portion of the internal thread which receives a large tensile load, so that the internal thread is broken from this portion thereof.

In order to solve this problem, a buttress internal thread is used instead of the above-mentioned triangular thread.

The buttress internal thread has a shape of a combination of those of a square thread and a triangular thread. Each internal thread ridge is provided on one side surface thereof with a pressure flank which receives a load of an external thread, and on the other side surface thereof with a clearance flank.

The pressure flank of the buttress internal thread is formed to have an angle of inclination of 7°, and the clearance flank thereof is formed to have an angle of inclination of 45°.

When an inner pressure increases in an accumulator using this buttress internal thread, a closure member is raised, and an external thread comes into pressure contact with a pressure flank of the internal thread to raise the same. This raising force exerted on the pressure flank is dispersed, and generates a force for expanding a container main body outward, this is a so-called diameter expansion force.

This diameter expansion force becomes small when the angle of inclination of the pressure flank is small. For example, when the angle of inclination is 7°, the diameter expansion force becomes about 1/5 as compared with a case where the angle of inclination is 30°. Therefore, since the diameter of the top end portion of the container main body does not substantially expand, a load of the external thread imparted to a ridge of the internal thread cannot be made to escape to a ridge of a subsequent internal thread, and then the internal thread is broken. Especially, a large load is imparted to the first to third ridges of the internal thread on the side of the base end thereof, and specially, a large tensile stress occur in a bottom of a valley of the internal thread, so that the internal thread tends to be broken from this portion thereof in most cases. Accordingly, this causes the lifetime of the accumulator to be shortened. The present invention aims at improving the lifetime of an accumulator in view of the above-described circumstances. Another object of the present invention is to prevent the breakage of an internal thread.

### Disclosure of the Invention

The accumulator according to the present invention has a bladder-containing container main body, a supply/discharge tube provided at one end of the container main body, and an internal thread provided at the other end thereof and screwed into a closure member, wherein the internal thread is a reverse-buttress internal thread formed by reversing a clearance flank and a pressure flank of a buttress internal thread, or the internal thread is an internal thread of an included angle of 90 degrees having an equal angle of inclination of the above-mentioned two flanks.

The internal thread according to the present invention is an internal thread having a clearance flank and a pressure flank, wherein the internal thread has an included angle of 90 degrees in which the angles of inclination of the two flanks are equal to each other.

### Brief Description of the Drawings

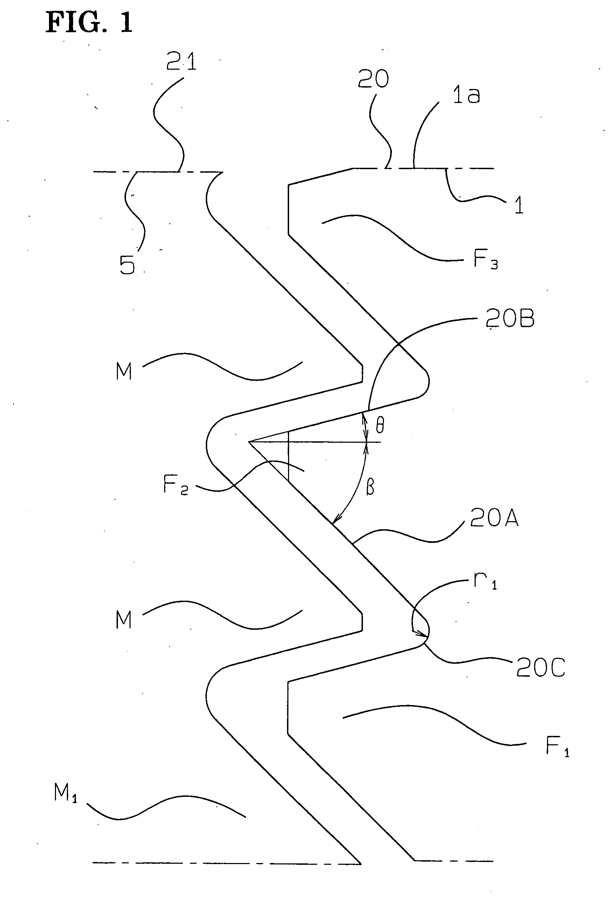

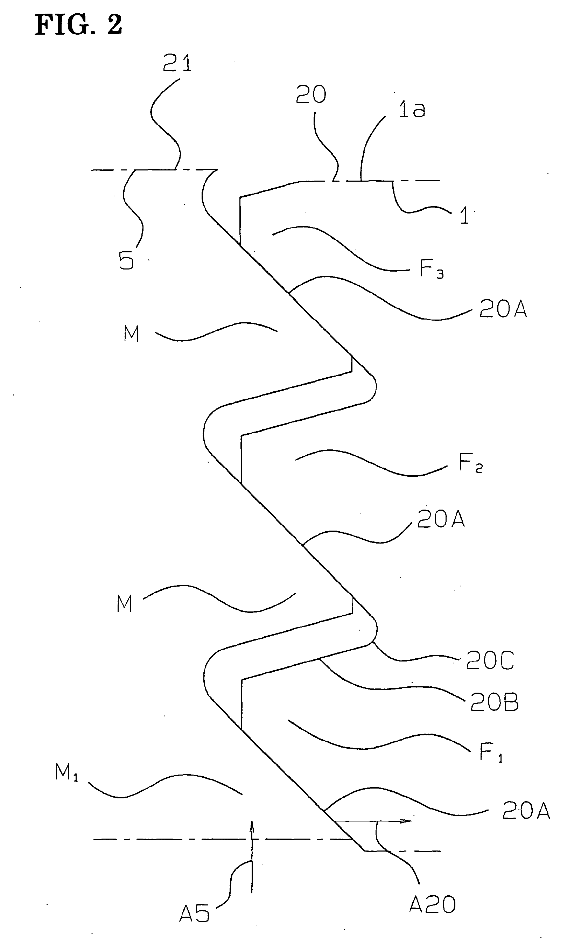

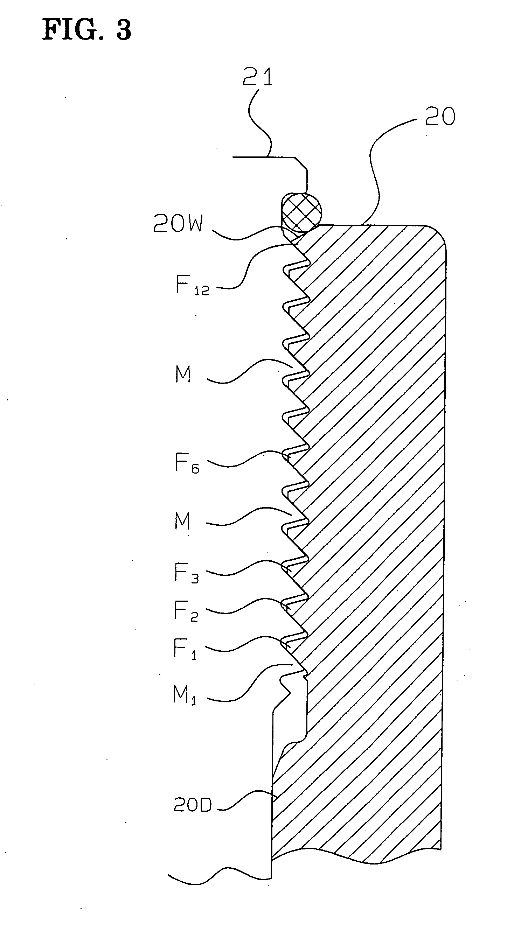

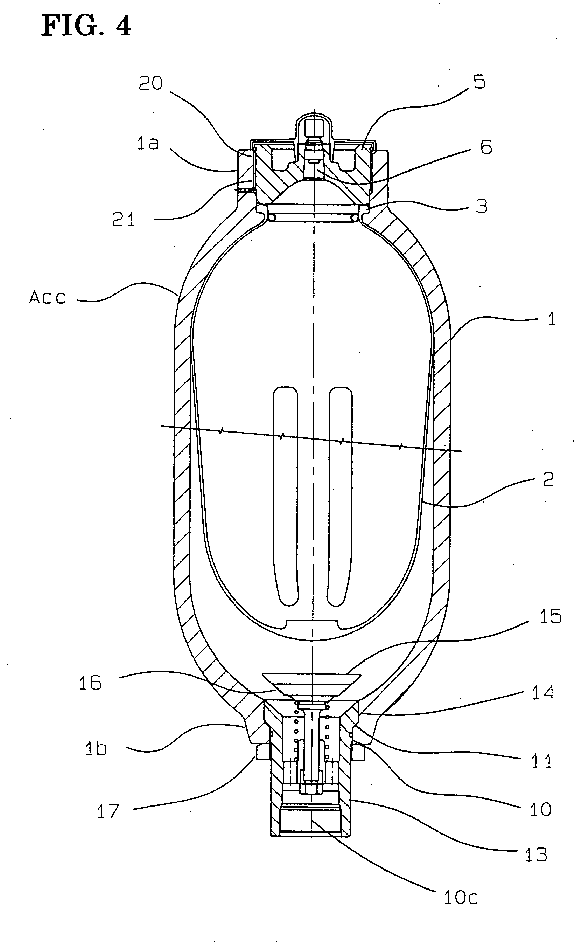

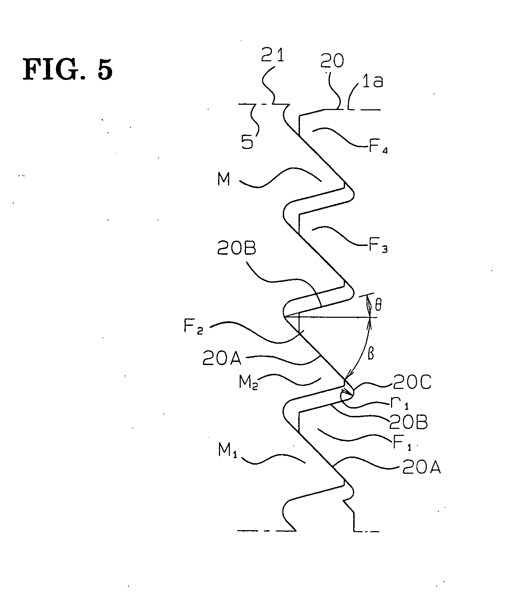

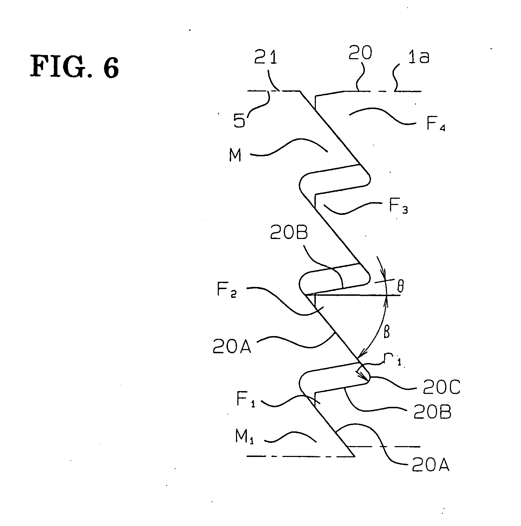

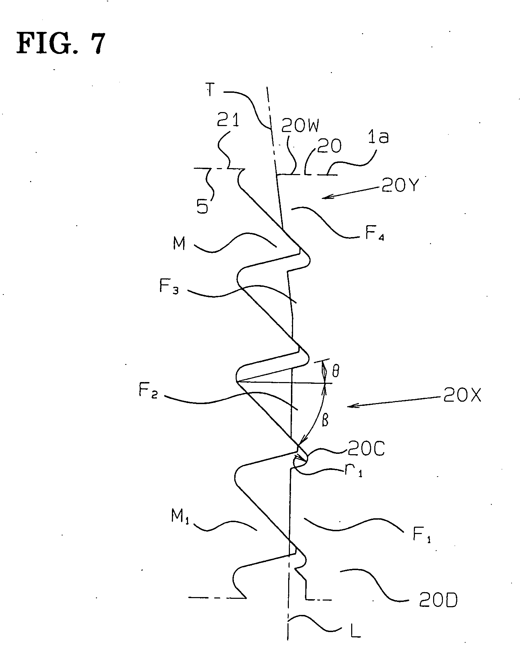

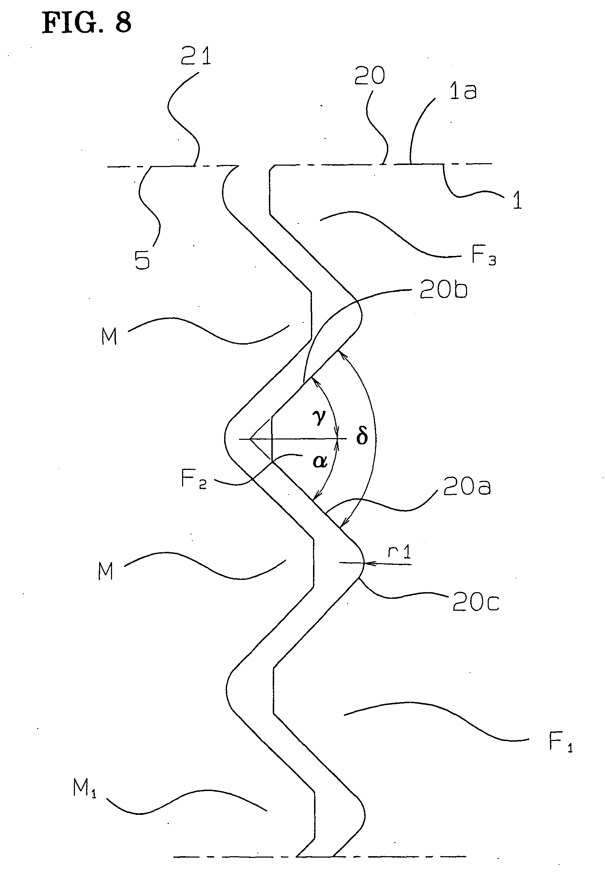

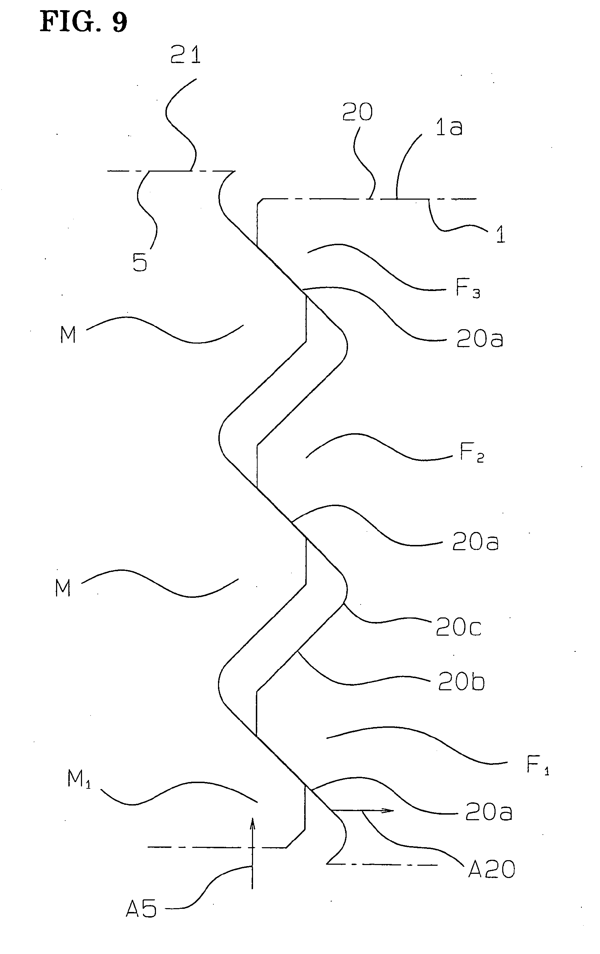

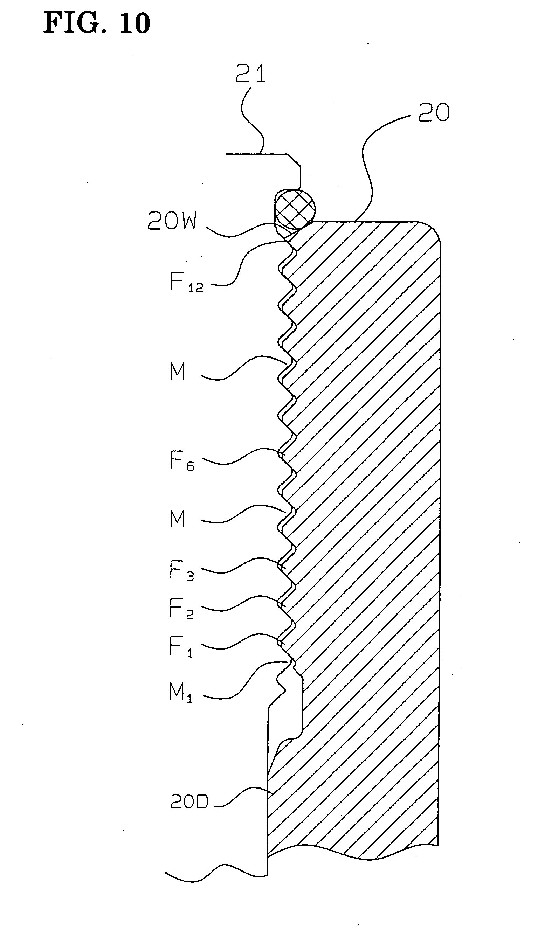

Fig. 1 to Fig. 4 are drawings showing a first embodiment of the present invention, in which Fig. 1 is an enlarged view of a principal portion of what is shown in Fig. 3, Fig. 2 a longitudinal sectional view showing the condition of a reverse-buttress internal thread of Fig. 1 which is receiving a load, Fig. 3 an enlarged sectional view of a principal portion of what is shown in Fig. 4, and Fig. 4 a longitudinal sectional view showing an accumulator. Fig. 5 is an enlarged longitudinal sectional view showing a second embodiment of the present invention, Fig. 6 an enlarged longitudinal sectional view showing a third embodiment of the present invention, Fig. 7 an enlarged longitudinal sectional view showing a fourth embodiment of the present invention, and Fig. 8 to Fig. 10 drawings showing a fifth embodiment of the present invention, in which Fig. 8 is an enlarged view of a principal portion of what is shown in Fig. 10, Fig. 9 a longitudinal sectional view showing the condition of the internal thread of Fig. 8 which is receiving a load, and Fig. 10 an enlarged longitudinal sectional view showing a screwed portion of a container main body of the accumulator and a closure member.

### Best Mode for Carrying Out the Invention

The first embodiment of the present invention will be described with reference to Fig. 1 to Fig. 4.

An accumulator ACC contains a bladder 2 in a container main body 1 thereof. This bladder 2 is a pleated bladder creased so that the bladder is folded to a predetermined shape. A flange portion 3 of this bladder 2 is engaged with an upper portion 1a of the container main body 1 and fixed by a closure member 5. This closure member 5 is provided with a supply/discharge port 6 communicating with the interior of the bladder 2, and an external thread 21 engaged with an internal thread 20 of the container main body 1. This internal thread 20 is a reverse-buttress internal thread provided with twelve internal thread ridges F1 to F12. The internal thread ridge F1 is positioned on a base end portion 20D of the internal thread 20, and the internal thread ridge F12 on a top end portion 20W thereof.

In this reverse-buttress internal thread, the shape (= angle of inclination = 15 degrees, for example) of a pressure flank and the shape (= angle of inclination = 45 degrees, for example) of a clearance flank of buttress internal thread ridges F1 to F12 are reversed with respect to the other. The angle of inclination of the clearance flank is set to β of a load-receiving reverse pressure flank 20A, while the angle of inclination of the pressure flank is set to θ of a reverse clearance flank 20B.

Namely, the angle β of inclination of the reverse pressure flank 20A is equal to that 45° of the clearance flank, while the angle θ of inclination of the reverse clearance flank is equal to that 15° of the pressure flank.

The reverse pressure flank 20A and reverse clearance flank 32B continue to each other via a bottom 20C of a valley of the internal thread, a radius rl of this bottom 20C of the valley is set to 0.4 mm. The radius rl of the bottom of the valley of the internal thread is selected suitably as necessary, and a preferable range of the radius rl is 1/10 to 1/3 of the pitch of the thread.

The container main body 1 is provided in a bottom portion 1b thereof with a through hole 10, in which a supply/discharge tube 13 is fitted firmly via an O-ring. A flange portion 14 of this supply/discharge tube 13 is in pressure contact with a receiving portion 11 of the through hole 10. A poppet valve 16 having a cushion cup 15 is supported slidably in the supply/discharge tube 13. The supply/discharge tube 13 is fixed to the container main body 1 by a nut 17.

The operation of this embodiment will now be described.

The accumulator Acc is connected to a hydraulic circuit (not shown) via the supply/discharge tube 13. When a liquid pressure in the hydraulic circuit varies to cause the pressure in the container main body 1 to increase, the closure member 5 is pressed in the direction of an arrow A5. As a result, as shown in Fig 2, the ridge M1 of the external thread 21 comes into pressure contact with the reverse pressure flank 20A of the internal thread 20.

At this time, a load imparted to the internal thread ridge F1 is dispersed to cause a pressing force in the direction of an arrow A20, i.e., a diameter expansion force to occur. Therefore, the reverse pressure flank 20A is elastically deformed as the flank 20A slides on a side surface of the ridge M1 of the external thread 21, and the flank 20A thereby expands outward. The angle of inclination β of this reverse pressure flank 20A is 45° and as three times as large as that of 15° of a pressure flank of a prior art internal thread, so that a circumferential displacement increases greatly. The portion of a load which cannot be borne by the internal thread ridge F1 is made to escape, and imparted to a subsequent internal thread ridge F2. The portion of the load which cannot be borne by the internal thread ridge F2 is also made to escape, and imparted to a subsequent internal thread ridge F3. Such processes are repeated one after another, and a total load imparted to the external thread is transmitted to internal thread ridges F1 and then to F12.

A second embodiment of the present invention will be described with reference to Fig. 5.

A difference between this embodiment and the first embodiment (Fig. 1 to Fig. 4) resides in that the radius of a bottom of a valley 20C of a reverse-buttress internal thread is 0.21 mm.

A third embodiment of the present invention will be described with reference to Fig. 6.

The differences between this embodiment and the first embodiment (Fig. 1 to Fig. 4) reside in that the angle β of inclination of a reverse pressure flank 20A of a reverse-buttress internal thread is 50°; the angle β of inclination of a reverse clearance flank 20B is 10°; and the radius rl of a bottom of a valley of the internal thread 20C is 0.21 mm.

A fourth embodiment of the present invention will be described with reference to Fig. 7.

A difference between this embodiment and the first embodiment (Fig. 1 to Fig. 4) resides in that a reverse-buttress internal thread is a stepped tapered internal thread. This internal thread is provided with a stepped portion 20X and a tapered portion 20Y. Internal thread ridges F1 to F3 of this stepped portion 20X are summit-cut, and a line connecting these summits becomes a straight line L parallel to a center line 10C of an accumulator. The internal thread ridges F3 to F12 of the tapered portion 20Y are summit-cut, and a line connecting these summits becomes a tapering line T inclining in the direction approaching the center line 10C from the base end portion 20D toward the free end portion 20W.

The embodiments of the present invention are not limited to the above-described embodiments. The embodiments may also be formed, for example, in the following manner.

When a buttress internal thread in a standard arrangement condition, in which, for example, a free end thereof is positioned on the upper side with a base end thereof positioned on the lower side, and, in which a flank (load receiving surface) of a smaller angle of inclination is positioned as a surface on the lower side of the internal thread ridge with a flank of a larger angle of inclination positioned as a surface on the upper side thereof, is set in a reversely arranged state in which, for example, the upper and lower portions of the buttress internal thread are reversed, and, in which the free end thereof is positioned on the lower side with the base end thereof positioned on the upper side, the flank of a larger angle of inclination becomes a load-receiving reverse pressure flank with the flank of a smaller angle of inclination becoming a reverse clearance flank. In this manner, the buttress internal thread may be formed to a reverse-buttress internal thread by setting the buttress internal thread in a reversed state.

The angle β of inclination of the reverse pressure flank may be selected suitably from the levels in the range of 30° to 60° instead of being set to an angle equal to the angle of inclination of the clearance of this buttress internal thread.

The angle θ of inclination of the reverse clearance may be set to a level different from that of an angle equal to the angle of inclination of the pressure flank of the buttress internal thread instead of being set to the angle equal to the angle of inclination of the pressure flank. The angle θ of inclination mentioned above is set smaller than that β of the reverse pressure flank. The angle θ is suitably selected from the levels in the range of 0° to 15°. For example, when the angle β of inclination of the reverse pressure flank is 45°, the angle θ of inclination employed of the reverse clearance flank is 0°.

### Experimental Examples:

Concerning the internal thread of the above-described embodiment, a triangular internal thread with an angle of 60° and a buttress internal thread, a tensile load was calculated by a finite-element method assuming that a total load imparted to the external thread is 332620N, and a maximum tensile stress (N/mm²) of the bottom of the valley of each of the internal thread ridges F1 - F12 was determined to obtain the results shown in the following Table 1.

In this Table 1,
a reference letter (F no) denotes an internal thread ridge number,
a reference letter (A) denotes a reverse-buttress internal thread (first embodiment) having an angle of inclination of a reverse clearance flank of 15°, an angle of inclination of a reverse pressure flank of 45°, and a radius of a bottom of a valley of the internal thread of 0.4 mm,
a reference letter (B) denotes a reverse-buttress internal thread (second embodiment) having an angle of inclination of a reverse clearance flank of 15°, an angle of inclination of a reverse pressure flank of 45°, and a radius of a bottom of a valley of the internal thread of 0.21 mm,
a reference letter (C) denotes a reverse-buttress internal thread (third embodiment) having an angle of inclination of a reverse clearance flank of 10°, an angle of inclination of a reverse pressure flank of 50° and a radius of a bottom of a valley of the internal thread of 0.21 mm,
a reference letter (D) denotes a stepped tapered reverse-buttress internal thread (fourth embodiment) having an angle of inclination of a reverse clearance flank of 15°, an angle of inclination of a reverse pressure flank of 45°, and a radius of a bottom of a valley of the internal thread of 0.4 mm,
a reference letter (E) denotes a prior art buttress internal thread having an angle of inclination of a clearance flank of 7°, an angle of inclination of a pressure flank of 45°, and a radius of a bottom of a valley of the internal thread of 0.21 mm, and
a reference letter (F) denotes a triangular internal thread formed to have an angle of inclination of a pressure flank of 30° and an angle of inclination of a clearance flank of 30°, respectively.

**Table 1:**

| MAXIMUM TENSILE STRESS (N/mm²) OF A BOTTOM OF A VALLEY OF AN INTERNAL THREAD | | | | | | |
|---|---|---|---|---|---|---|
| F no | A | B | C | D | E | F |
| 1 | 317 | 449 | 435 | 355 | 846 | 629 |
| 2 | 355 | 373 | 467 | 349 | 385 | 466 |
| 3 | 262 | 458 | 319 | 393 | 393 | 458 |
| 4 | 171 | 166 | 264 | 287 | 299 | 264 |
| 5 | 173 | 192 | 259 | 243 | 257 | 254 |
| 6 | 140 | 161 | 247 | 364 | 199 | 222 |
| 7 | 146 | 160 | 197 | 169 | 185 | 194 |
| 8 | 138 | 151 | 191 | 138 | 201 | 191 |
| 9 | 139 | 137 | 134 | 141 | 136 | 142 |
| 10 | 148 | 148 | 161 | 145 | 105 | 124 |
| 11 | 138 | 127 | 139 | 142 | 94 | 129 |
| 12 | 134 | 126 | 137 | 135 | 85 | 96 |

The following became clear from what were shown in this Table 1.
(1) The tensile stress of the bottoms of the valleys of the internal thread ridges F1 to F3 on a base end portion of the internal threads is larger as compared with that of the other internal thread ridges F4 to F12.
(2) The tensile stress of the bottoms of the valleys of the reverse-buttress internal threads (A), (B), (C), (D) is smaller as compared with that of the other internal threads (E), (F).
(3) The tensile stress of the bottom of the valley of the reverse-buttress internal thread (A) is the smallest among the internal threads (A), (B), (C), (D).
(4) The tensile stress of the bottom of the valley of the reverse-buttress internal thread is extremely small, i.e., about 1/2.8 of that of the corresponding portion of a buttress internal thread (E).

### Experimental Example 2:

Next, the circumferential displacement (mm) of the internal thread ridges F₁ to F₁₂ of the above-mentioned (B) (= reverse-buttress internal thread of the second embodiment), (C)(= reverse-buttress internal thread of the third embodiment) and (F)(= regular metric thread) was determined to obtain the results as shown in Table 2.

**Table 2:**

| CIRCUMFERENTIAL DISPLACEMENT (mm) | | | |
|---|---|---|---|
| F no | B | C | F |
| 1 | 0.0212 | 0.0245 | 0.0144 |
| 2 | 0.0211 | 0.0245 | 0.0134 |
| 3 | 0.0210 | 0.0245 | 0.0130 |
| 4 | 0.0209 | 0.0245 | 0.0132 |
| 5 | 0.0213 | 0.0248 | 0.0133 |
| 6 | 0.0218 | 0.0254 | 0.0137 |
| 7 | 0.0225 | 0.0260 | 0.0141 |
| 8 | 0.0231 | 0.0266 | 0.0144 |
| 9 | 0.0240 | 0.0273 | 0.0150 |
| 10 | 0.0253 | 0.0286 | 0.0157 |
| 11 | 0.0264 | 0.0300 | 0.0166 |
| 12 | 0.0280 | 0.0314 | 0.0179 |

The following were clarified from what were shown in this Table 2.
(1) The circumferential displacement tends to increase as the internal thread ridge number increases.
(2) The circumferential displacement of the reverse-buttress internal threads (B), (C) is larger than that of the regular internal thread (F).
(3) The circumferential displacement of the reverse-buttress internal thread (C) is larger than that of the reverse-buttress internal thread (B).

A fifth embodiment of the present invention will be described with reference to Fig. 8 to Fig. 10.

The difference between this embodiment and the first embodiment resides in that, as a means for screwing a container main body and a closure member on each other, an internal thread of an included angle of 90 degrees having an equal angle of inclination of two flanks is used instead of a reverse-buttress internal thread.

Namely, as shown in Fig. 4, an accumulator ACC contains a bladder 2 in a container main body 1 thereof. This bladder 2 is a pleated bladder 2 creased so that the bladder is folded to a predetermined shape. A flange portion 3 of this bladder 2 is engaged with an upper portion 1a of the container main body 1 and fixed by a closure member 5. This closure member 5 is provided with a supply/discharge port 6 communicating with the interior of the bladder 2 and an external thread 21 engaged with an internal thread 20 of the container main body 1. This internal thread 20 is provided with twelve internal thread ridges F1 to F12. The internal thread ridge F1 is positioned on the base end portion 20D of the internal thread 20, and the internal thread ridge F12 on the top end portion 20W thereof.

This internal thread is an internal thread having an included angle of 90 degrees. The included angle δ is 90 degrees, and larger than that of a standard triangular thread, for example, an ISO standard triangular thread (ISO 261). An angle α of inclination of a pressure flank 20a thereof and that γ of a clearance flank 20b are formed to have an equal level of 45 degrees. Since these two flanks 20a and 20b have an equal angle α, γ, the flanks become symmetric, this internal thread can be cut easily as compared with a reverse-buttress internal thread. Namely, it is not necessary to prepare a cutting tool of a special shape, and a cutting process can be carried out efficiently.

Incidentally, though the angles α, γ of inclination of the flanks 20a, 20b are formed to be equal to each other, the included angle δ may not necessarily be set to 90 degrees accurately. The included angle includes angles in the neighborhood of 90 degrees. Namely, the included angle δ is set suitably and selectively to 90 degrees or to a level in the range of substantially 90 degrees. For example, the angles α, γ may be set to 44.5 degrees respectively, and the included angle δ to 89 degrees.

The pressure flank 20a and clearance flank 32b continue to each other via a bottom 20c of an internal thread valley, and the radius rl of this bottom 20c of the valley is set to 0.4 mm. The radius rl of the bottom of the thread valley is set suitably and selectively as necessary, and preferably in the range of 1/10 to 1/3 of the pitch of the thread.

The container main body 1 is provided at a bottom portion 1b thereof with a through hole 10, in which a supply/discharge tube 13 is fitted firmly via an O-ring. A flange portion 14 of this supply/discharge tube 13 is in pressure contact with a receiving portion 11 of the through hole 10. A poppet valve 16 having cushion cup 15 is slidably supported on the supply/discharge tube 13. The supply/discharge tube 13 is fixed to the container main body 1 by a nut 17.

The operation of this embodiment will now be described.

The accumulator Acc is connected to a hydraulic circuit (not shown) via the supply/discharge tube 13. When a liquid pressure in the hydraulic circuit varies to cause the pressure in the container main body to increase, the closure member 5 is pressed in the direction of an arrow A5, and the external thread ridge M1 of the external thread 21 is thereby brought into pressure contact with the pressure flank 20a of the internal thread 20 as shown in Fig. 9.

A load imparted to the internal thread ridge F1 is dispersed to cause a pressing force in the direction of an arrow A20, i.e., a diameter expansion force to occur. Therefore, the pressure flank 20a is elastically deformed as the pressure flank 20a slides on a side surface of an external thread ridge M1 of the external thread 21, the pressure flank 20a thereby expanding outward.

During this time, since the angle α of inclination of the pressure flank 20a of the internal thread is 45°, which is 1.5 times as large as that (i.e. , 30°) of the pressure flank of a prior art standard triangular thread, a circumferential displacement greatly increases.

Also, the angles α, γ of inclination of the two flanks 20a, 20b of the internal thread are 45 degrees respectively, and the included angle δ is 90 degrees, the thickness of a root portion and the strength of the internal thread increase as compared with those of a standard triangular thread.

The portion of a load which cannot be borne by the internal thread ridge F1 is made to escape and imparted to the subsequent internal thread ridge F2. The portion of the load which cannot be borne by the internal thread ridge F2 is made to escape and imparted to the subsequent internal thread ridge F3. Such processes are repeated one after another, and a total load imparted to the external thread is transmitted to the internal thread ridges F1 to F12.

The embodiments of the present invention are not limited to the above-described embodiments. For example, an internal thread having an included angle of 90 degrees may be formed to be a stepped tapered thread by providing a stepped portion and a tapered portion on the above-mentioned internal thread of an included angle of 90 degrees in the same manner as in the fourth embodiment (Fig. 7).

Since the internal thread having an included angle of 90 degrees is thick at a root portion thereof and has a high strength in comparison with a standard triangular thread, this internal thread can be utilized for a thread made of a fragile material, such as gypsum.

### Advantageous Effect of the Invention

Since the accumulator according to the present invention is provided with a reverse-buttress internal thread in which a clearance flank and a pressure flank of a buttress internal thread are reversed, or provided with an internal thread having an included angle of 90 degrees in which the angles of inclination of the two flanks are equal to each other, the angle of inclination of a load receiving surface increases greatly. Therefore, the diameter expansion force is increased in comparison with the prior art examples, thereby a load borne by the thread ridges is lessened. This prevents the breakage of the internal thread, and the lifetime of the accumulator can be improved.

Since the internal thread according to the present invention is an internal thread having an included angle of 90 degrees in which the angle of inclination of the clearance flank and that of the pressure flank are equal to each other, the strength of the internal thread is high as compared with a standard triangular thread, so that the internal thread is not easily impaired. Moreover, since the internal thread is easily cut as compared with a reverse-buttress internal thread, the cutting process efficiency can be improved.

## Claims

1. An accumulator having a bladder-containing container main body, a supply/discharge tube provided at one end of the container main body, and an internal thread provided at the other end of the container main body and engaged with a closure member,
**characterized in that** the internal thread is a reverse-buttress internal thread in which a clearance flank and a pressure flank of a buttress internal thread are reversed, or the internal thread is an internal thread in which an included angle is 90 degrees having an equal angle of inclination of the two flanks.

2. An accumulator according to Claim 1, wherein the reverse-buttress internal thread is formed by putting a buttress internal thread in a standard arranged state having a clearance flank and a pressure flank to a reversely arranged state, and thereby turning the clearance flank into a load-receiving reverse pressure flank with the pressure flank turned into a reverse clearance flank, wherein the reverse pressure flank expands outward when the reverse pressure flank receives a pressing force.

3. An accumulator according to Claim 1, wherein the reverse-buttress internal thread is a thread in which a reverse clearance flank and a load-receiving reverse pressure flank are formed by reversing the shape of the pressure flank of the buttress thread and the shape of the clearance flank thereof, wherein the reverse pressure flank expands outward when the reverse pressure flank receives a pressing force.

4. An accumulator according to Claim 1, wherein the reverse-buttress internal thread is a thread formed by setting an angle of inclination of a clearance flank of a buttress internal thread to that of a load-receiving reverse pressure flank with the clearance flank formed into a reverse clearance flank, wherein the angle of inclination of the reverse clearance flank is set to be smaller than that of the reverse pressure flank, and the reverse pressure flank expands outward when the reverse pressure flank receives a pressing force.

5. An accumulator according to Claim 1, wherein the angle of inclination of the reverse pressure flank is 30° to 60°.

6. An accumulator according to Claim 1, wherein the reverse pressure flank and reverse clearance flank continue to each other via a bottom of a valley of the internal thread, wherein the radius of the bottom of the valley of the internal thread being in the range of 1/10 to 1/3 of the pitch of the thread.

7. An accumulator according to Claim 1, wherein the angle of inclination of the reverse clearance flank is 0° to 15°.

8. An accumulator according to Claim 1, wherein the reverse -buttress internal thread is provided with a stepped portion and a tapered portion.

9. An internal thread having a clearance flank and a pressure flank, **characterized in that** the internal thread is an internal thread having an included angle of 90 degrees in which an angle of inclination of the two flanks is equal to each other.

10. An internal thread according to Claim 9, wherein the internal thread is provided with a stepped portion and a tapered portion.
